# EUROPEAN PATENT SPECIFICATION

(11) **EP 2 730 363 B1**
(45) Date of publication and mention of the grant of the patent: **11.09.2019**
(21) Application number: 13187860.5
(22) Date of filing: 09.10.2013
(51) Int. Cl.: B23K 26/08, B23K 26/38, F21V 5/04, B23K 26/06, B23K 26/073

(54) **Optical system and laser processing apparatus**
Optisches System und Laserverarbeitungsvorrichtung
Système optique et appareil de traitement au laser

(30) Priority: 12.11.2012 JP 2012248423
(43) Date of publication of application: 14.05.2014
(73) Proprietor: Mitsubishi Heavy Industries Machine Tool Co., Ltd., Shiga, 520-3080 (JP)
(72) Inventor: Nishitani, Yusuke, Tokyo, 108-8215 (JP); Watanabe, Masao, Tokyo, 108-8215 (JP)
(74) Representative: Hoffmann Eitle

(56) References cited:
- EP-A1- 2 730 363
- DE-A1-102007 035 717

## Description

### {Technical Field}

The present invention relates to an optical system through which laser light passes and to a laser processing apparatus.

### {Background Art}

With a laser processing apparatus, laser light is transmitted to a processing head from a laser oscillator via an optical fiber, and the laser light is focused by lenses in the processing head to increase the energy density of the laser light, thereby welding or cutting a workpiece. Here, the workpiece is a metal, an alloy, or the like. Examples of the laser oscillator include a CO₂ laser oscillator in which CO₂ is used as a medium, a YAG laser oscillator in which a crystal having a garnet structure formed of oxides of yttrium and aluminum is used as a medium, a fiber laser oscillator in which an optical fiber itself is used as a medium, and so forth.

Patent Literature 1 discloses an invention related to a laser processing apparatus, which is a technique for increasing the depth of focus of laser light by employing an axicon lens as a focusing means, in order to achieve an increased processing speed. Note that, in the axicon lens described in Patent Literature 1, a flat surface is positioned on the laser-light-source side, that is, the side from which the laser light enters, and a conical surface is positioned on the side from which the laser light is emitted.

### {Citation List}

### {Patent Literature}

{PTL 1} Japanese Unexamined Patent Application, Publication No. 2009-82958
{PTL 2} Japanese Unexamined Patent Application, Publication No. Hei 9-108879

### {Summary of Invention}

### {Technical Problem}

At a point (processing point) onto which a laser processing apparatus radiates laser light to perform processing of a workpiece, such as welding, cutting, or the like, the energy intensity distribution of the laser light becomes higher in a peripheral region than in a center region thereof, thus making the energy intensity at the processing point higher at the edge of the laser light. As a result, the processing precision can be increased as compared with a case in which the energy distribution at the processing point is higher in the center region than in the peripheral region.

Patent Literature 2 discloses a laser processing apparatus in which, by using an inversion optical system provided with two pairs of cylindrical lenses, an inner area and an outer area of the energy density distribution at a cross-section of a laser beam that follows a Gaussian distribution are inverted with respect to a plane that includes the optical axis of the laser beam. With the laser processing apparatus disclosed in Patent Literature 2, a high-quality laser beam impinges on the workpiece because the inner area and the outer area of the energy density distribution that follows a Gaussian distribution are inverted with respect to the plane that includes the optical axis of the laser beam.

However, because a laser beam is divided into two and the inner area and the outer area thereof are inverted, the cross-section of the laser beam at the position of the workpiece is not circular. Because of this, the workpiece can be processed only in the direction in which the laser beam comes into contact with the workpiece. In other words, with the laser processing apparatus disclosed in Patent Literature 2, the direction in which the workpiece can be processed is limited.

In addition, with the laser processing apparatus disclosed in Patent Literature 2, a laser beam is divided by the two pairs of cylindrical lenses, the inner area and the outer area thereof are inverted, and then, the laser beams are focused on one point on the workpiece by using a focusing lens. Because of this, the configuration of the optical system is very complicated, and the optical-axis adjustment is very difficult because it is necessary to separately adjust the optical axis of the laser beam before the division and the optical axes of the two divided laser beams, and because it is also necessary to make the two divided laser beams converge at the same position on the workpiece.

Moreover, DE 10 2007 035 717 A1, regarded as the closest prior art, discloses a laser welding apparatus for welding together work pieces, comprising a laser beam source and an optical device with an optical path, wherein the optical device is configured to transform a laser beam generated by the laser beam source into a laser beam with an annular cross-section.

The present invention has been conceived in light of the above-described circumstances, and an object thereof is to provide an optical system and a laser processing apparatus with which the energy intensity distribution of laser light at a processing point can be made higher in a peripheral region than in a center region in a simple manner.

### {Solution to Problem}

An optical system according to the present invention is defined by the combination of features of claim 1. Claim 2 relates to a preferred embodiment.

An optical system according to an embodiment is provided with a collimating optical component that emits laser light including parallel rays; an axicon lens that has a circular conical shape and into which the light emitted from the collimating optical component enters; and a focusing optical component that focuses the light emitted from the axicon lens, wherein a conical surface of the axicon lens is positioned on the collimating optical component side, and a flat surface of the axicon lens is positioned on the focusing optical component side, to make an energy intensity distribution of the light emitted from the axicon lens be caldera-like in a plane that includes the optical axis and that is cut along the optical axis.

In this configuration, by passing through the axicon lens, the laser light including the parallel rays that has entered the axicon lens advances so that light in the center region of the entered light is directed outward, and light in the peripheral region of the entering light is directed inward, that is, toward the optical axis. As a result, laser light whose energy intensity is higher in the peripheral region than in the center region is obtained. By applying such laser light to the processing point in a workpiece, the processing precision at the processing point is enhanced because the energy intensity is increased at the edge of the laser light and the energy intensity thereof has a steep distribution tendency.

In addition, the energy intensity distribution can be reversed merely by providing the axicon lens, and thus, the energy intensity distribution can be made higher in the peripheral region than in the center region with a simple configuration. Furthermore, the laser light emitted from the axicon lens has a circular shape in a plane cut perpendicularly to the optical axis. Therefore, a workpiece can be cut with high precision, regardless of the relative directions in which the laser light and the workpiece are moved.

In addition, a laser processing apparatus according to the present invention is provided with the above-described optical system and a laser oscillator that generates laser light and that emits the laser light toward the optical system.

### {Advantageous Effects of Invention}

With the present invention, the energy intensity distribution of laser light at a processing point can be made higher in a peripheral region than in a center region in a simple manner.

### {Brief Description of Drawings}

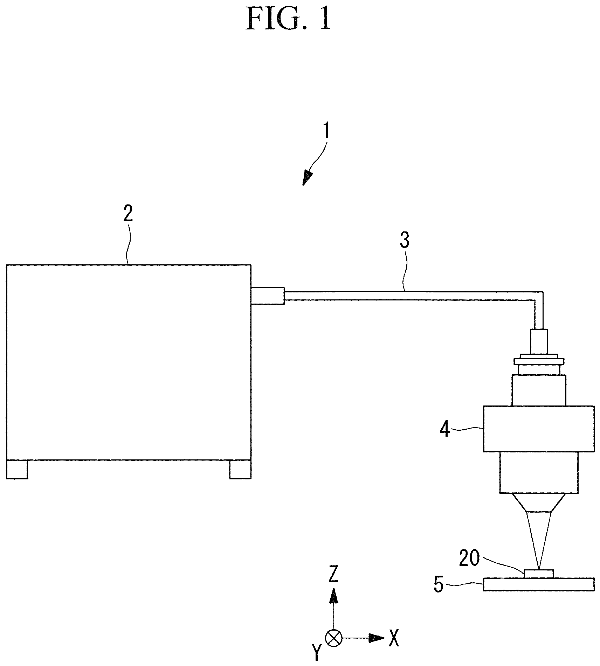

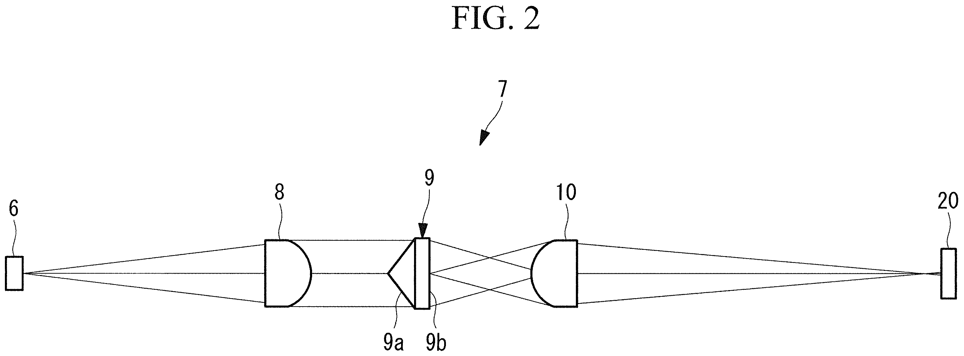

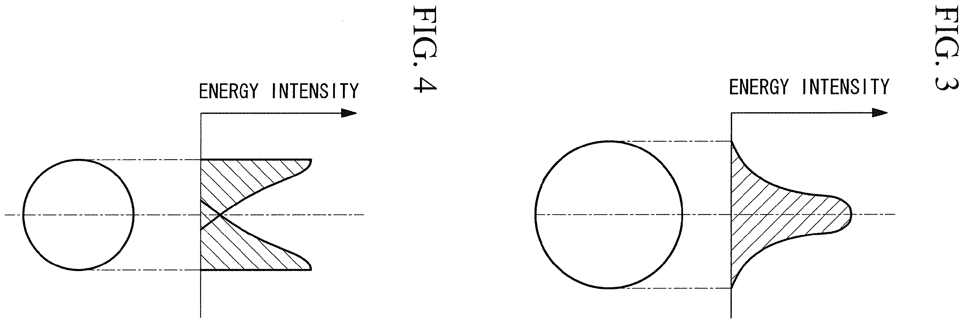

{Fig. 1} Fig. 1 is a diagram showing, in outline, the configuration of a laser processing apparatus according to an embodiment of the present invention.
{Fig. 2} Fig. 2 is a diagram showing, in outline, the configuration of an optical system of the laser processing apparatus according to the embodiment of the present invention.
{Fig. 3} Fig. 3 is a graph showing the energy intensity distribution of laser light at an entrance side of an axicon lens.
{Fig. 4} Fig. 4 is a graph showing the energy intensity distribution of laser light at an exit side of the axicon lens, as well as near the processing point.

### {Description of Embodiment}

An embodiment according to the present invention will be described below with reference to the drawings.

A laser processing apparatus 1 according to an embodiment of the present invention will be described below. As shown in Fig. 1, the laser processing apparatus 1 is provided with a laser oscillator 2, an optical fiber 3, a processing head 4, a processing stage 5, and so forth.

With the laser processing apparatus 1, laser light is transmitted to the processing head 4 from the laser oscillator 2 via the optical fiber 3, and the laser light is focused by lenses in the processing head 4 to increase the energy density of the laser light, thereby cutting a workpiece 20. Here, the workpiece 20 is a metal, an alloy, or the like.

The laser oscillator 2 is, for example, a fiber laser oscillator in which an optical fiber itself is used as a medium. In the case of a fiber laser oscillator, laser light having a wavelength of 1.07 µm to 1.08 µm can be obtained. The laser light generated by the laser oscillator 2 is transmitted to the optical fiber 3. Note that the present invention is not limited to a fiber laser, and it can be applied to a YAG laser, or the like.

The optical fiber 3 is connected to the laser oscillator 2 at one end and is connected to the processing head 4 at the other end. The optical fiber 3 transmits the laser light from the laser oscillator 2 to the processing head 4.

As shown in Fig. 2, the processing head 4 is provided with a laser entrance portion 6, an optical system 7, and so forth. The laser entrance portion 6 is connected to the end of the optical fiber 3 and radiates the laser light transmitted thereto via the optical fiber 3 toward the optical system 7. The optical system 7 is composed of a plurality of lenses and optical components, and focuses the laser light radiated from the laser entrance portion 6. By doing so, it is possible to achieve high enough energy density for cutting the workpiece 20.

As shown in Fig. 1, the processing stage 5 is moved in the plane of a flat surface (X-Y plane) perpendicular to the incident axis of the laser light. The workpiece 20 is placed on the processing stage 5. By doing so, the workpiece 20 can be moved in the X-Y plane relative to the processing head 4. Note that, although a case in which the processing head 4 is fixed will be described in this embodiment, the present invention is not limited to this example. For example, the present invention can be applied to the case in which the workpiece 20 is fixed at one location, and the workpiece 20 is cut by moving the processing head 4.

As described above, with the laser processing apparatus 1 of this embodiment, the laser oscillator 2 generates laser light; the generated laser light passes through the optical fiber 3; and the laser light is radiated from the processing head 4 toward the workpiece 20. When cutting the workpiece 20, the processing stage 5 on which the workpiece 20 is placed is moved in the X-Y plane, and thus, the workpiece 20 is cut in a straight line or in a curved line.

Next, the optical system 7 in the processing head 4 of the laser processing apparatus 1 according to this embodiment will be described with reference to Fig. 2.

The optical system 7 is provided with, for example, a collimating lens group 8, an axicon lens 9, a focusing lens group 10, and so forth.

The collimating lens group 8 optically adjusts the laser light emitted from the laser entrance portion 6 to form collimated light. The collimated light generated by the collimating lens group 8 is radiated toward the axicon lens 9.

The axicon lens 9 is disposed between the collimating lens group 8 and the focusing lens group 10, allows the laser light radiated from the collimating lens group 8 to pass therethrough, and the light is emitted toward the focusing lens group 10.

The focusing lens group 10 focuses the laser light that has entered it after passing through the axicon lens 9. As a result, laser light whose energy intensity is high along the optical axis is obtained, thus making it possible to cut the workpiece 20.

Next, the axicon lens 9 will be described.

The axicon lens 9 is an optical component having a circular conical shape, in which a first surface 9a is a conical surface, and a second surface 9b, a surface opposing the first surface 9a, is a flat surface. The first surface 9a, which is a conical surface, is disposed on the side from which the laser light enters, in other words, it is disposed so as to face the collimating lens group 8, and the second surface 9b, which is a flat surface, is disposed on the side from which the laser light is emitted, in other words, it is disposed so as to face the focusing lens group 10.

The axicon lens 9 is disposed so that the center axis of the circular cone coincides with the optical axis of the laser light, and the flat surface of the second surface 9b is disposed so as to be perpendicular to the optical axis.

Laser light having parallel rays enters the axicon lens 9, and the energy intensity distribution of the entering laser light is higher in a center region, which includes the optical axis, than in a peripheral region, as shown in Fig. 3. In addition, in a plane cut perpendicularly to the optical axis, the entering laser light has a circular shape.

By disposing the axicon lens 9 so that the conical surface is positioned on the entrance side and the flat surface thereof is positioned on the exit side, the laser light passing through the axicon lens 9 advances so that the light in the center region thereof is directed outward and, the light in the peripheral region thereof is directed inward, that is, toward the optical axis. As a result, in the laser light exits from the axicon lens 9, the energy intensity distribution is reversed. In other words, the light in the center region whose energy intensity is higher when entering is directed toward an outer circumferential portion, and the light in the peripheral region whose energy intensity is lower when entering is directed toward the optical axis; thus, as shown in Fig. 4, the energy intensity distribution of the emitted laser light is higher in the peripheral region than in the center region that includes the optical axis.

In a plane that includes the processing point and that is cut perpendicularly to the optical axis, a high-energy-intensity region of the laser light emitted from the axicon lens 9 is distributed along the outer circumference of the circular shape, thus forming a ring shape. In a plane that includes the optical axis and that is cut along the optical axis, the energy intensity distribution of the laser light emitted from the axicon lens 9 is caldera-like, being higher in the peripheral region than in the center region.

As a result, the energy intensity is increased at the edge of the laser light and also has a steep distribution tendency. Therefore, in the case in which the laser light that has passed through the optical system 7 of this embodiment is used, the processing precision can be increased as compared with a case in which laser light having an energy distribution that is higher in a center region than in a peripheral region is used. In addition, because it is possible to reliably reverse the energy intensity distribution, it is possible to increase the difference in the energy intensity between the peripheral region where the energy intensity is high and the center region where the energy intensity is low. As a result, it becomes possible to cut a workpiece 20 having a greater thickness, for example, a steel plate having a thickness of 50 mm.

In addition, in a plane that is cut perpendicularly to the optical axis, the laser light emitted from the axicon lens 9 has a circular shape. Therefore, regardless of the relative directions in which the laser light and the workpiece 20 are moved, the workpiece 20 can be cut with high precision, and a thick workpiece can also be cut.

Although it is possible to form a ring-shaped high-energy-intensity region by using spherical aberration of a conventional spherical lens, because laser light tends to spread out when the distance from the focal position is increased, the length in the laser axis direction (depth of focus) has to be relatively small in a portion in which the ring shape is formed. On the other hand, in the case in which the axicon lens 9 is used, as in this embodiment, the tendency of the laser light to spread out is reduced, and thus, it is possible to increase the length in the laser axis direction (to increase the depth of focus) in the portion in which the ring shape is formed.

In the case in which the ring shape is formed by using spherical aberration of the conventional spherical lens, the laser light spreads out when the distance from the processing head 4 is increased, thus increasing the laser light diameter, which decreases the energy intensity. On the other hand, in the case in which the ring shape is formed by using an axicon lens, even when the laser light diameter is increased, the energy intensity distribution in the ring shape is maintained along the laser axis direction. Therefore, because the depth of focus of the portion in which the ring shape is formed is greater in this embodiment, it is possible to cut a relatively thick workpiece.

### {Reference Signs List}

- 1: laser processing apparatus
- 2: laser oscillator
- 3: optical fiber
- 4: processing head
- 5: processing stage
- 6: laser entrance portion
- 7: optical system
- 8: collimating lens group (collimating optical component)
- 9: axicon lens
- 9a: first surface
- 9b: second surface
- 10: focusing lens group (focusing optical component)
- 20: workpiece

## Claims

1. An optical system comprising:
a collimating optical component (8) that emits laser light including parallel rays;
an axicon lens (9) that has a circular conical shape and into which the light emitted from the collimating optical component (8) enters; and
a focusing optical component (10) that focuses the light emitted from the axicon lens (9),
wherein the axicon lens (9) is disposed between the collimating optical component (8) and the focusing optical component (10),
wherein the optical system is configured to enter laser light having parallel rays into the axicon lens (9), wherein the energy intensity distribution of the entering laser light is higher in a center region, which includes the optical axis, than in a peripheral region,
**characterized in that** a conical surface (9a) of the axicon lens (9) faces the collimating optical component (8) side, and a flat surface of the axicon lens (9) faces the focusing optical component (10) to make an energy intensity distribution of the light emitted from the axicon lens (9), in a plane that includes the optical axis and that is cut along the optical axis, be higher in a peripheral region than in a center region that includes the optical axis.

2. A laser processing apparatus comprising:
an optical system (7) according to Claim 1; and
a laser oscillator (2) that generates laser light and emits the laser light toward the optical system (7).

## Patentansprüche

1. Optisches System, umfassend:
eine kollimierende optische Komponente (8), die Laserlicht abgibt, das parallele Strahlen einschließt,
eine Axicon-Linse (9), die eine kreisförmige, konische Form aufweist, und in die das von der kollimierenden optischen Komponente (8) abgegebene Licht eintritt, und
eine fokussierende optische Komponente (10), die das von der Axicon-Linse (9) abgegebene Licht fokussiert,
wobei die Axicon-Linse (9) zwischen der kollimierenden optischen Komponente (8) und der fokussierenden optischen Komponente (10) angeordnet ist,
wobei das optische System konfiguriert ist, um Laserlicht, das parallele Strahlen aufweist, in die Axicon-Linse (9) eintreten zu lassen, wobei die Energieintensitätsverteilung des eintretenden Laserlichts in einem mittigen Bereich, der die optische Achse einschließt, höher ist als in einem Randbereich,
**dadurch gekennzeichnet, dass**
eine konische Oberfläche (9a) der Axicon-Linse (9) der Seite der kollimierenden optischen Komponente (8) gegenüberliegt, und eine flache Oberfläche der Axicon-Linse (9) der fokussierenden optischen Komponente (10) gegenüberliegt, um eine Energieintensitätsverteilung des von der Axicon-Linse (9) abgegebenen Lichts in einer Ebene, die die optische Achse einschließt, und die entlang der optischen Achse geschnitten wird, in einem Randbereich höher als in einem mittigen Bereich, der die optische Achse einschließt, werden zu lassen.

2. Laserverarbeitungseinrichtung, umfassend:
ein optisches System (7) nach Anspruch 1, und
einen Laser-Oszillator (2), der Laserlicht erzeugt und das Laserlicht in Richtung des optischen Systems (7) abgibt.

## Revendications

1. Système optique comprenant :
un composant optique de collimation (8) qui émet de la lumière laser incluant des rayons parallèles ;
une lentille axicon (9) qui présente une forme conique circulaire et dans laquelle pénètre la lumière émise depuis le composant optique de collimation (8) ; et
un composant optique de focalisation (10) qui focalise la lumière émise depuis la lentille axicon (9),
dans lequel la lentille axicon (9) est placée entre le composant optique de collimation (8) et le composant optique de focalisation (10),
dans lequel
le système optique est configuré pour faire pénétrer la lumière laser ayant des rayons parallèles dans la lentille axicon (9), dans laquelle la distribution d'intensité énergétique de la lumière laser entrant est plus élevée dans une région centrale, qui inclut l'axe optique, que dans une région périphérique,
**caractérisé en ce que**
une surface conique (9a) de la lentille axicon (9) fait face au côté du composant optique de collimation (8), et une surface plane de la lentille axicon (9) fait face au composant optique de focalisation (10) de manière à ce qu'une distribution d'intensité énergétique de la lumière émise depuis la lentille axicon (9), dans un plan qui inclut l'axe optique et qui est découpé le long de l'axe optique, soit plus élevée dans une région périphérique que dans une région centrale qui inclut l'axe optique.

2. Appareil de traitement laser comprenant :
un système optique (7) selon la revendication 1 ; et
un oscillateur laser (2) qui génère la lumière laser et émet la lumière laser en direction du système optique (7).
